(19) **Europäisches Patentamt / European Patent Office / Office européen des brevets**

(11) **EP 2 335 952 B1**

(12) **EUROPEAN PATENT SPECIFICATION**

(45) Date of publication and mention
of the grant of the patent:
**28.11.2012 Bulletin 2012/48**

(51) Int Cl.:
*B60D 1/167* *(2006.01)*          *B60D 1/30* *(2006.01)*
*B62D 13/02* *(2006.01)*          *B62D 13/06* *(2006.01)*

(21) Application number: **10195733.0**

(22) Date of filing: **17.12.2010**

(54) **Drawbar for a trailer**

Deichsel für einen Anhänger

Barre pour une remorque

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2009 NL 2003979**

(43) Date of publication of application:
**22.06.2011 Bulletin 2011/25**

(73) Proprietor: **Lusaro BV
6932 AM Westervoort (NL)**

(72) Inventor: **van den Berg, Adrianus Johannes
6932 AM Westervoort (NL)**

(74) Representative: **De Vries & Metman
Overschiestraat 180
1062 XK Amsterdam (NL)**

(56) References cited:
**BE-A- 674 811          BE-A- 701 652
CH-A- 443 012          CH-A- 450 932
DE-A1- 3 414 610          NL-A- 8 300 861**

**Description**

The invention relates to a drawbar for a trailer.

Such drawbars are much used int. al. for trailers which have to be manoeuvrable as they are towed along. CH 443 012 discloses a trailer with a drawbar, which is rotatable about two vertical axies. Generally, at a first end a drawbar is swivel mounted with a drawbar frame at a front underneath a trailer, with the drawbar frame comprising two wheels on which the trailer can rest. A second end of the drawbar can be swivel connected to a trailer coupling, for instance a vehicle towing hook. As a result of this, a drawbar can provide a connection between the towing vehicle and a trailer which can be swiveled at two points.

Because of these two centres of rotation, and because of the length of the shaft, a trailer can achieve considerable manoeuvrability.

A drawback to such trailers is that the drawbar can easily jacknife while driving in reverse. With this, the shaft can for instance swivel under one side of the trailer such that a towing vehicle can bump against the trailer with its rear side. In addition, the shaft can wind up at such an angle to the vehicle moving along that the shaft will touch the vehicle and/or become stuck.

Because a drawbar is swivel connected to the trailer at a first end and swivel connected to a trailer coupling at a second end, it furthermore is hard to predict which direction the trailer will choose while driving in reverse.

For that reason the invention seeks to provide a drawbar for trailers which does not suffer from the above-mentioned drawbacks or which cancels them out at least in part, while the advantages thereof are retained at least in part. Furthermore, the invention seeks to adapt a trailer in such a way as to make it flexibly usable, easily manoeuvrable, and wherein driving in reverse with the trailer and/or pushing the trailer along using the drawbar is simplified.

At least one of these and/or other objectives is achieved with a drawbar suitable for a trailer, for instance a caravan, according to claim 1.

Such a design makes it possible to decouple the angle of rotation of the at least one wheel vis-à-vis the drawbar frame.

If the invention is applied to caravans, a wholly different design concept may be used. For, in that case, a caravan need no longer have a central axle and a tail wheel that can be turned up. The weight of the caravan can be carried by an axle which has been mounted further back and by the axle of the wheels of the drawbar.

This offers a number of advantages: for instance, a minimal nose weight is no longer required. As a result, the towing vehicle can be put under a lighter load. In addition, connecting and disconnecting is made simpler and requires less strength on the part of the user. Furthermore, the distribution of the load in the trailer is less crucial.

During ordinary movement of a trailer with a drawbar according to the invention, no lateral forces are exerted on a towing hook, as a result of which the risk of zigzagging of the towing vehicle can be reduced. Because the axles of the trailer are further removed from the centre of gravity of the trailer, the risk of the trailer zigzagging can also be reduced.

Because the wheelbase has changed and the overhang is reduced, less ground clearance may be required. As a result of this, the floor of the trailer can be lowered. This may facilitate the getting in and out.

The drawbar may be equipped with an actuator, which is suitable for setting the angle between the direction of travel of the wheel and the longitudinal axis of the drawbar frame.

Making use of an actuator will enable the trailer, for instance after a driving unit for movement has been mounted, to move independently. By means of the actuator the setting of the angle between the direction of travel of the wheel and the longitudinal axis of the drawbar frame can be set in accordance with a number of scenarios. In these scenarios, for instance, a number of parameters can be linked. As a result of this, the number of degrees of freedom while driving in reverse with the trailer can be reduced, thus increasing the predictability of the direction of travel of the trailer.

Alternatively, the angle of rotation of the wheel can be controlled by means of a cable which at its ends is connected to the wheel suspension. The cable can run through a winch which is mounted on the drawbar frame. Furthermore, this device can be executed such that the winch is attached to the wheel suspension and the ends of the cable are attached to the drawbar frame. In addition, in corresponding fashion a chain may be used, with a sprocket. If desired, this sprocket may be driven by means of a worm reducing gearbox connected to an actuator.

The first rotating assembly of the drawbar can be locking, for instance using a stop mechanism, so that the direction of rotation of the at least one wheel vis-à-vis the drawbar frame can be locked.

An advantage of this stop mechanism is that while towing the trailer, it will behave like a common trailer.

In addition, the drawbar can comprise a first angle measuring device for measuring an angle between the longitudinal axis of the trailer and the longitudinal axis of a shaft connected to the drawbar frame, and a second angle measuring device for measuring an angle between the longitudinal axis of the trailer and the longitudinal axis of a vehicle moving the trailer along.

From these angle measurements the angle of the direction of travel of the wheels to be set vis-à-vis the longitudinal axis of the drawbar frame can be calculated. Different calculation routines can be used for different scenarios in this process.

The measured angles can be passed to a logical switch mechanism, with the swivel angel of the at least one wheel vis-à-vis the drawbar frame, depending on the measured angles, being adjustable by means of the actuator addressable by the logical switch mechanism.

The angle between the direction of travel of the at least one wheel and the longitudinal axis of the drawbar frame can be adjustable in such a way that the angle between the longitudinal axis of the trailer and the longitudinal axis of the drawbar frame can be kept at half of the angle between the longitudinal axis of the trailer and the longitudinal axis of the vehicle moving the trailer along.

By choosing these angles such, the two centres of rotation, the one of the trailer connection and the other of the drawbar, behave as one centre of rotation, as it were. As a result, in the system one degree of freedom can be eliminated. This means that the predictability of the behaviour of the trailer can be increased. This may facilitate the driving in reverse.

The invention further relates to a method of pushing along a trailer with a drawbar such as described above, with the method comprising the following steps to be carried out in suitable sequence: (a) providing a trailer, equipped with a drawbar such as described above, (b) providing a vehicle suitable for moving the trailer along, (c) connecting the vehicle to the shaft of the drawbar, and (d) pushing the trailer along by means of the vehicle.

The use of a drawbar with a wheel can be applied for instance in the case of trailers which are comparatively large, for instance 5.5 metres and longer, and comparatively heavy, for instance heavier than 1,200 kg. These trailers may be too large to be supported by a single axle. In the case of such trailers a tandem axle is used. Such a tandem axle an have a negative effect on the steerability of the trailer. A drawbar according to the invention can also be used here. With this the steerability while driving straight on or in reverse may be increased.

The invention will be further illustrated with reference to embodiments which are shown in the drawing. In the drawing:

Figure 1 shows a schematic perspective view of a drawbar according to a first embodiment of the invention,
Figure 1A shows a schematic side view in cross-section of the drawbar according to Figure 1,
Figure 2 shows a schematic perspective view of a drawbar according to a second embodiment of the invention,
Figure 3 shows a schematic, partially transparent top view of a trailer with a drawbar according to Figure 2,
Figure 4 shows a schematic side view in cross-section of a drawbar according to a third embodiment of the invention,
Figure 5 shows a schematic, partially transparent perspective top view of the drawbar according to Figure 4,
Figure 6 shows a schematic, partially cut-away perspective top view of the drawbar according to Figure 4,
Figure 7 shows a schematic perspective bottom view of the drawbar according to Figure 4,
Figure 8 is a schematic, partially transparent perspective detail view of the drawbar according to Figure 4,
Figure 9 is a schematic, partially transparent top view of a detail of the drawbar according to Figure 4,
Figure 10 is a schematic bottom view of the drawbar according to Figure 4,
Figure 11 is a first schematic perspective view of the wheel suspensions of the drawbar according to Figure 4,
Figure 12 is a second schematic perspective view of the wheel suspension of the drawbar according to Figure 4,
Figure 13 is a first schematic top view of the trailer with the drawbar according to the invention and a vehicle moving along,
Figure 14 is a second schematic top view of a trailer with the drawbar according to the invention and a vehicle moving along,
Figure 15 is a third schematic top view of a trailer with the drawbar according to the invention and a vehicle moving along,
Figure 16 is a fourth schematic top view of a trailer with the drawbar according to the invention and a vehicle moving along,
Figure 17 is a fifth schematic top view of a trailer with a drawbar according to the invention and a vehicle moving along,
Figure 18 is a sixth schematic top view of a trailer with the drawbar according to the invention and a vehicle moving along,

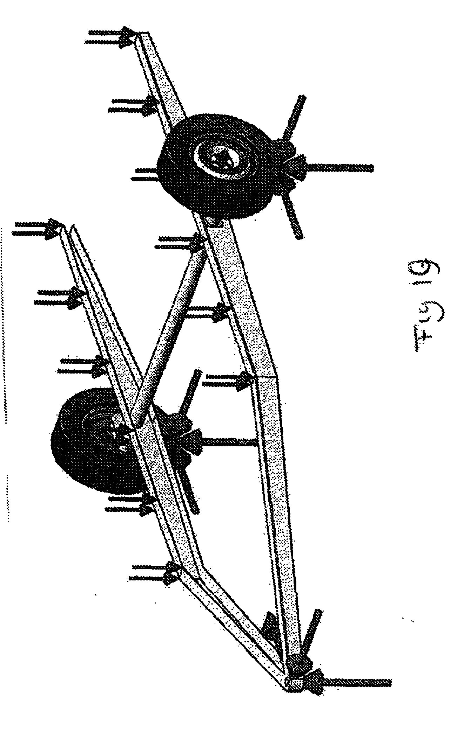

Figure 19 shows a schematic perspective top view of a chassis according to the state of the art,
Figure 20 shows a schematic perspective top view of a chassis with a drawbar according to the invention,
Figure 21 shows a schematic perspective top view of an alternative embodiment of a chassis with the drawbar according to the invention,
Figure 22 shows a schematic side view of a trailer with body with a drawbar according to the invention,
Figure 23 shows a schematic perspective top view of an alternative embodiment of a trailer with a drawbar according to the invention,
Figure 24 shows a schematic perspective top view of a trailer according to Figure 23 in cross-section.

It should be noted that the drawing is just a schematic representation of preferred embodiments of the invention. The drawing should not be considered as restricting the invention in any way. In the figures the same or corresponding parts are indicated with corresponding reference numerals.

The term "drawbar", which is used in this specification and/or the claims, should be taken to mean, but in no way be considered restricted to, a frame which is swivel mountable underneath a trailer, around a standing axle, having an axle with at least one wheel and a shaft connected to the frame, which can be connected to a trailer coupling of a vehicle.

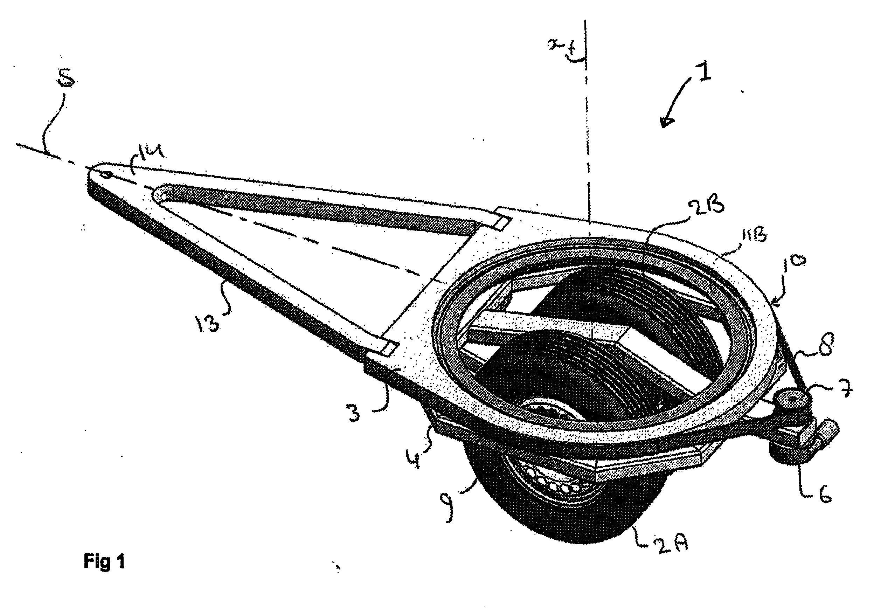

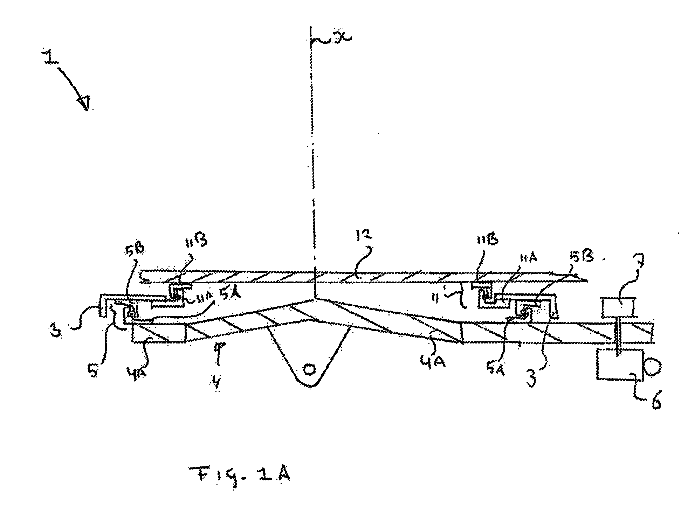

Figure 1 shows a schematic perspective view of a drawbar 1. The drawbar 1 comprises two wheels 2A and 2B, which are swivel mounted in a wheel suspension 4 connected to a first rotating assembly 5, as is shown in Figure 1A.

Alternatively, a single wheel may be selected; however, in the event of a flat tyre the shaft in that case may jacknife during sudden breaking. In order to increase the deadweight capacity, use can be made of two wheels.

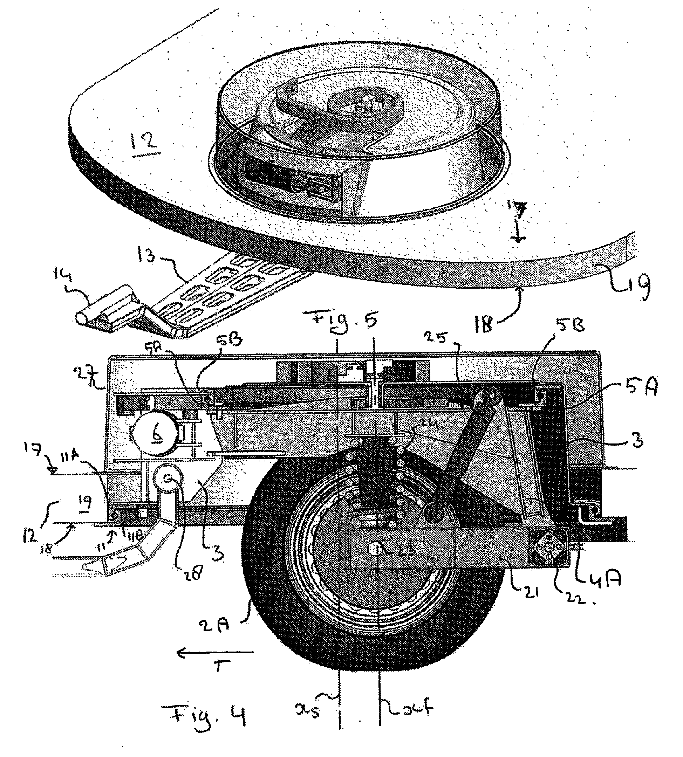

The wheel suspension 4 comprises a support frame 4A connected to a first ring 5A of the first rotating assembly 5, from which the wheels 2A and 2B are rotatably suspended. A second ring 5B of the first rotating assembly 5 is connected to a drawbar frame 3, as is shown in Figure 1A. Because the first rotating assembly 5 is suspended from the wheel suspension 4 with a first ring 5A and from the drawbar frame 3 with a second ring, the wheel suspension 4 can rotate around a first standing axle $x_f$ in the drawbar frame 3. With this the first standing axle $x_f$ can cross for instance with the axle 23 (see Figure 4) of the wheels 2A and 2B. An advantage in that case is that the swivelling of the wheels can then take place on their bearing face with the surface. As a result, the swivelling of the wheels 2A and 2B can take place with a comparatively small resistance and/or friction vis-à-vis the surface.

In Figure 1A the drawbar frame 3 is additionally connected to a first ring 11A of a second rotating assembly 11. A second ring 11B of the second rotating assembly 11 is connected to a frame 12 of the trailer 20. Because the drawbar frame 3 is connected to the frame 12 of the trailer 20 via the second rotating assembly 11, the drawbar frame 3 can rotate vis-a-vis the frame 12 of the trailer 20 around a second standing axle $x_s$.

With this the first and the second standing axle $x_f$ and $x_s$ can coincide. Also, the first standing axle $x_f$ can lie back vis-à-vis the second standing axle $x_s$ in the ordinary direction of travel T, as is shown in Figure 4. By blocking the rotating assembly 5 during the movement of the trailer in the ordinary direction of travel T, the wheels can swivel around the standing axle $x_s$, which, seen in direction T, is positioned in front of the lying axle y. As a result, the wheels 2A and 2B may have the tendency during the movement to conform to the direction of movement while moving along. This behaviour can improve the stability of the trailer during movement.

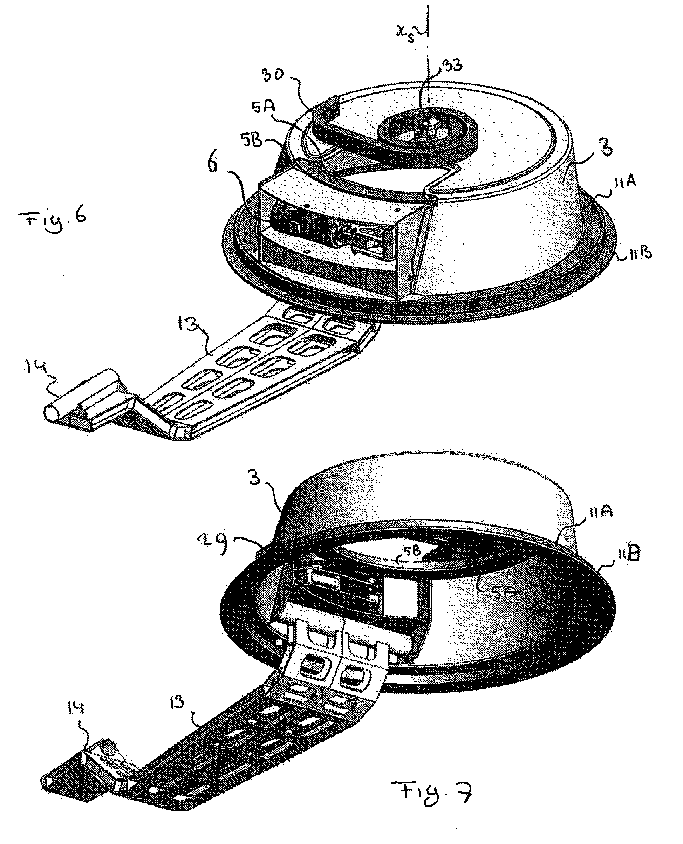

In Figure 7 it is shown that in addition a first end of a shaft 13 is tiltably mounted to the drawbar frame 3. This shaft 13 can be connected at a second end 14, for instance to a trailer coupling of a vehicle.

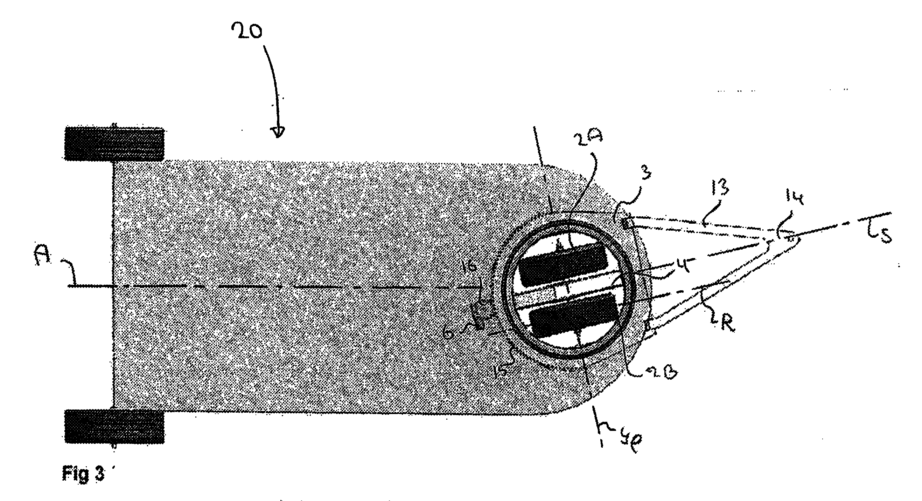

To the support frame an actuator 6 is mounted, which can drive a belt 8 via a driving wheel 7. The belt 8 is connected at a first end 9 to a first side of the drawbar frame 3 and at a second end 20 to a second side of the drawbar frame 3. By addressing the actuator, an angle $\gamma$ can be set between the direction of travel R of the wheels 2A, 2B and a longitudinal axis S of the drawbar frame 3, as is shown in Figure 3.

The actuator 6 can for instance be an electromotor with a self-breaking transmission. One potential transmission in that case can be a wormwheel reductor. Also, instead of the driving wheel a wormwheel may be employed.

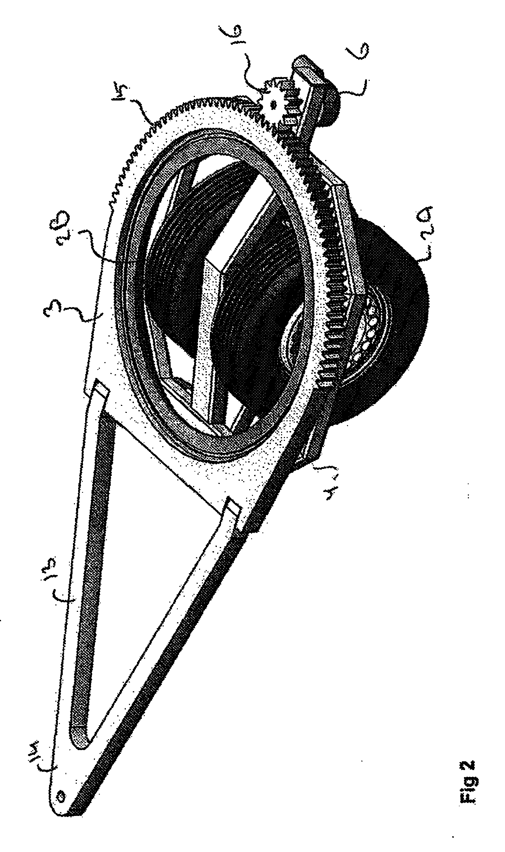

In Figure 2 an alternative for an actuator for setting the angle $\gamma$ between the direction of travel R of the wheels 2A and 2B and the longitudinal axis S of the drawbar frame 3 is shown. In this case the drawbar frame 3 comprises a round side, equipped with a toothed rack 15, which a pin wheel 16 connected to the actuator 6 can engage with. By addressing the actuator 6, this can start to rotate, as a result of which the pin wheel 16 can also start to rotate. Because of the rotating movement of the pin wheel 16, the pin wheel 16 can travel along the teeth of the toothed rack 15. As a result, the angle $\gamma$ between the direction of travel R of the wheels 2A and 2B and the longitudinal axis S of the drawbar frame 3 can be set. The purpose of setting the angle $\gamma$ will be elucidated at a later stage of the description.

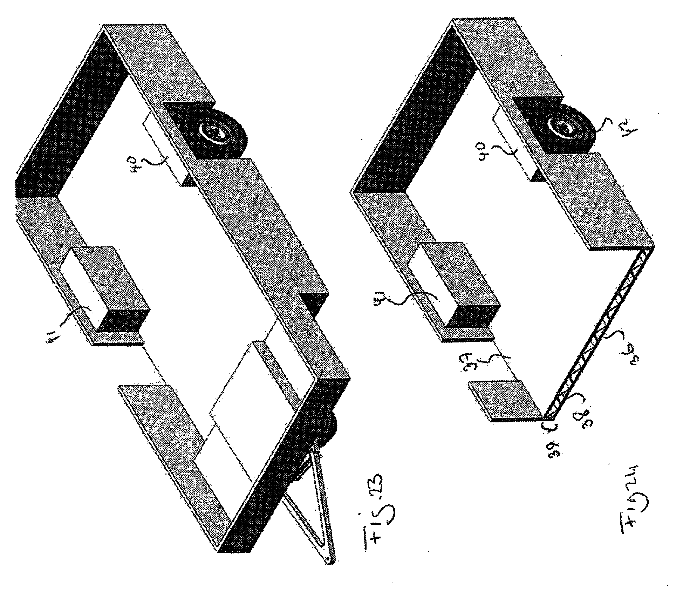

In Figure 3 in a schematic top view a trailer 20 with a drawbar 1 according to Figure 2 is shown. The frame of this trailer 20 can comprise an integral sandwich structure. In the case of such a structure the frame comprises a top plate 17, a bottom plate 18, and an intermediate structure 19 glued in between, as becomes clear from Figures 5 and 24. In Figure 3 the direction of travel R of the wheels 2A and 2B is the same as the direction S of the shaft 13. In the transport of the trailer 20 behind a towing vehicle, the direction of travel R of the wheels can be fixedly coupled to the longitudinal axis S of the shaft. As a result, the trailer 20 can behave like an ordinary trailer. When driving in reverse with a vehicle connected to the trailer, the fixed coupling of the wheel suspension 4 and the drawbar frame 3 can be undone. As a result, the angle between the direction of travel R of the wheels 2A and 2B can be variable or be ordered by a logical switch mechanism.

In Figure 4 a schematic side view of a further embodiment of the invention is shown in cross-section. In this embodiment the wheel suspension 4 comprises a frame 4A, to which a shaft bracket 21 is tiltably connected around a tilting shaft 22. The wheel 2A is swivel connected with the shaft bracket 21 via a shaft 23. The tilting of the shaft bracket can be sprung by a compression spring 24 and absorbed by the shock absorber 25. The compression spring 24 is positioned at the level of the shaft 23 between the tiltable wheel support 21 and the frame 4A. In the inner space of the windings of the compression spring 24 a stop 26 may be mounted. This stop 26 can be made of rubber or some other springy material. This stop 26 can be attached to the frame 4A and be provided with a clamp recess 27 in which at least one first winding of the compression spring 24 can be clamped and/or fixed. By such clamping the compression spring 24 can be kept in its place.

The shock absorber 25 is also positioned between the tiltable shaft bracket 21 and the frame 4A. In that case the shock absorber 25 has a first end which is swivel connected to the shaft bracket 21 and a second end which is swivel connected to the frame 4A.

As described above, the frame 4A is swivel connected with the drawbar frame 3 via a rotating assembly 5 around a first standing axle $X_f$. In this case the rotating assembly 5 is made up of a first ring 5A, which is suspended by means of a ball bearing ring in a second ring 5B. When the force of the rotating assembly 5 to be taken up is high, for instance in the case of low-loading semitrailers for large equipment, instead of a ball bearing ring it is also possible to use a roller bearing ring, needle bearing ring or tapered roller bearing ring. This applies *mutatis mutandis* for the rotating assembly 11 as well.

In the embodiment as shown in Figure 4 the drawbar frame 3 has an angular bell shape.

The drawbar frame 3 is swivel connected at the bottom side with the frame 12 of the trailer 20 via the rotating assembly 11 around a second standing axle Xs.

The first standing axle $X_f$, which also runs through the axis of rotation 23 of the wheels 2A and 2B, lies behind the second standing axle $X_s$ seen in the line of draught T. As a result, the wheel suspension 4 in the drawbar frame 3 can swivel with less resistance and friction than the drawbar frame 3 itself. When towing the trailer, the wheel suspension 4 can be fixed with the drawbar frame, so that the direction of travel R of the wheels 2A and 2B corresponds with the longitudinal axis S of the drawbar frame. In such a fixed position, a rotation of the frame will experience greater resistance. This is because the wheels do not swivel around the first standing axle $X_f$, but rather around the second standing axle $X_s$, as a result of which the bearing face resting on the surface will experience a slight displacement in addition to torquing.

As a result, the drawbar in a fixed position will resist torquing to some extent. The trailer can thus display more stable road-holding qualities at higher speeds.

In addition, the shaft 13, in this embodiment produced as an open spatial frame, can be connected at the lower inner side of the frame 4A via a tilting shaft 28 to the drawbar frame 3, as can be clearly seen in the bottom view of Figure 7.

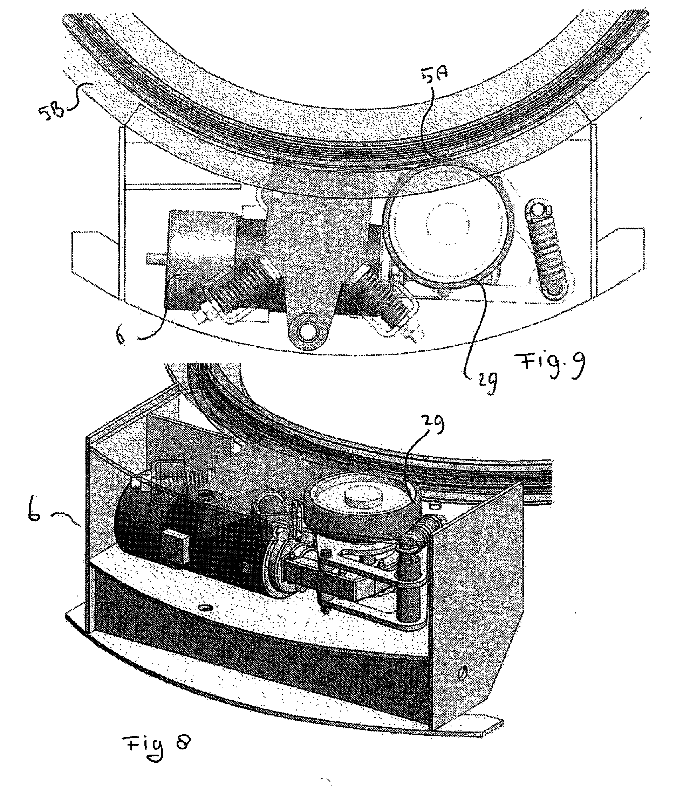

In the embodiment shown in Figures 4-12 the actuator 6 is mounted at the lower inner side of the drawbar frame 3. The actuator 6 in this case is connected to a driving wheel 29, which can run along the outer side of the first ring 11A of the first rotating assembly 11.

In Figure 6 a schematic, perspective, partially cut-away representation of an embodiment of the drawbar frame 3 according to Figure 4 is shown. In this Figure the top of the bell-shaped drawbar frame 3 is shown. At the top around the standing axle $x_s$ there is a flexible cable channel 30 draped in a spiral. This flexible cable channel can enable a turning of the drawbar frame 3, while int. al. the actuator 6 can continue to be addressed.

In Figures 7-9 the driving wheel 29 can be seen which can engage with a first ring 5a of the rotating assembly 5.

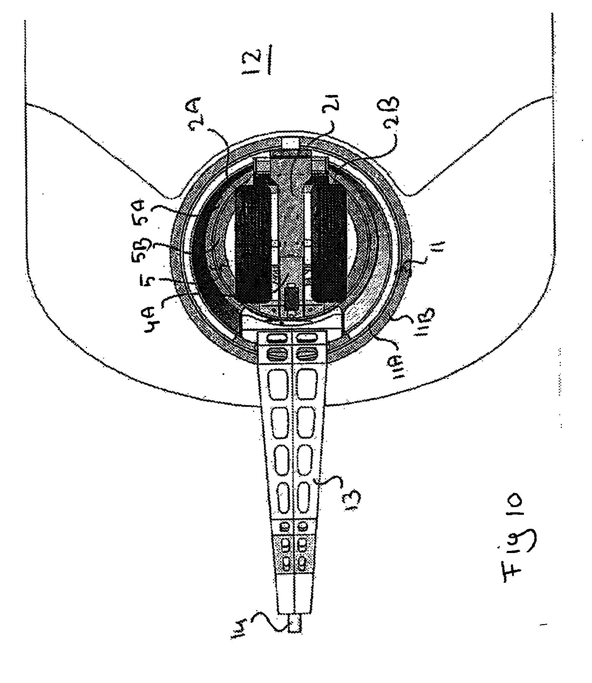

In the bottom view of Figure 10 it is again shown that the first and second standing axles $x_f$ and $x_s$ have moved relative to each other in the line of draught T. In this embodiment the rotating assembly 5 is not concentric but is lying back vis-à-vis the rotating assembly 11 seen in the line of draught T.

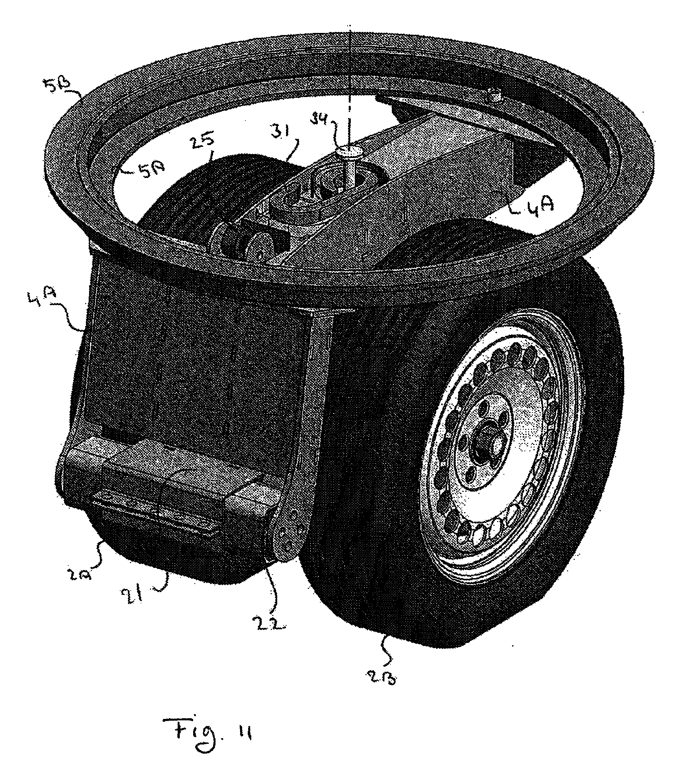

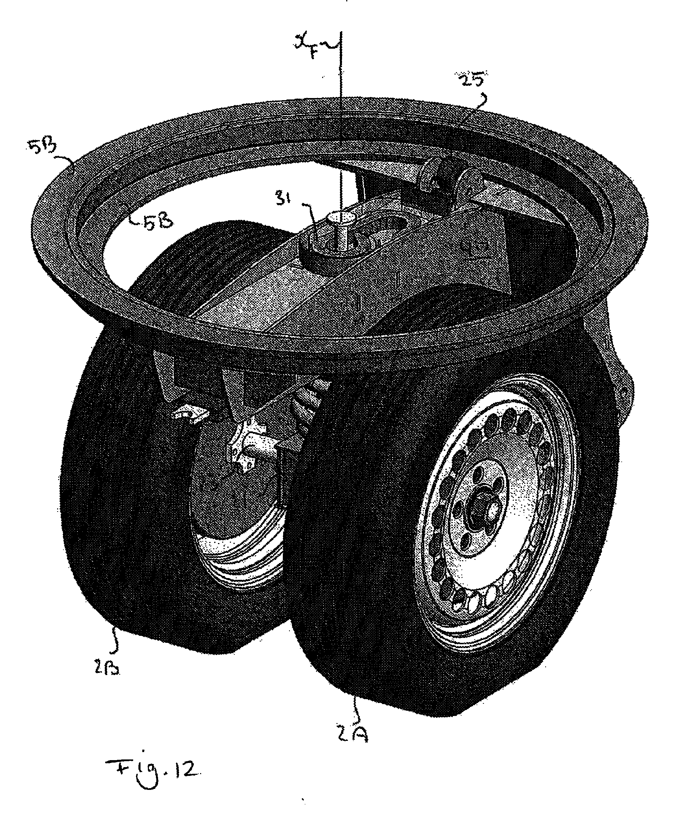

In Figures 11 and 12 the wheel suspension 4a is shown in greater detail. Via a flexibele cable channel 31 cables between the drawbar frame and the wheel suspension can be connected. The flexible cable channel 31 is arranged draped in a spiral around the standing axle $x_f$. As a result, the cable channel 31 can enable a turning of the wheel suspension 4, while for instance the brakes of the wheels 2A and 2B can continue to be addressed.

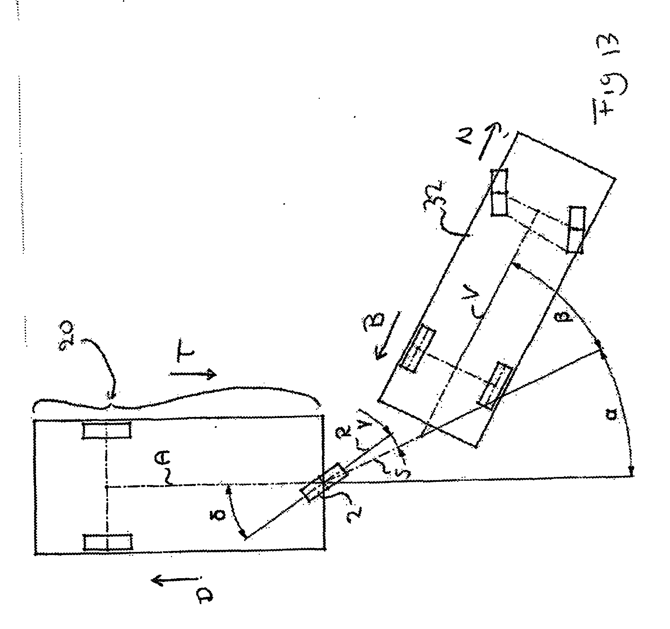

In Figure 13 in a top view a schematic depiction is provided of a number of relevant directions and a number of relevant angles. In order to set the correct angle δ between the longitudinal axis A of the trailer and the direction of travel R of the wheels 2A and 2B while driving in reverse with the trailer 20, a number of measured values are needed.

In Figure 13 these measured values are represented schematically. These measured values are the angles α and β, with the angle a being the angle between the longitudinal axis A of the trailer 20 and the longitudinal axis S of the drawbar frame 3. The angle β is the angle between the longitudinal axis S of the drawbar frame 3 and the longitudinal axis V of the vehicle 32 moving the trailer 20 along. In addition, it has to be established whether the vehicle 32 is moving in reverse in direction B or straight on in direction N.

The above-mentioned angles can be measured using angle sensors. The angle α can be measured with the aid of an angle measuring sensor 33 mounted in the standing axle $x_s$, such as shown in Figure 6.

The angle γ can be measured with the aid of an angle measuring sensor 34 mounted in the standing axle $x_f$, such as shown in Figure 11.

The angle (α + β) between the longitudinal axis A of the trailer 20 and the longitudinal axis V of the vehicle 32 moving the trailer 20 along can be implemented for instance by means of light or sound detectors mounted on the trailer. In this process, for instance, a sound and/or light source can be mounted on the trailer 20, the reflected light and/or sound of which is registered. Using for instance the measured interference which occurs, distances can be determined between the vehicle 32 and the trailer 20 on the left-hand side and the right-hand side. The angle (α + β) can then be calculated from these distances.

Alternatively, cable length measuring devices can be used to measure the angle (α + β). In this process use can be made for instance of two tensioned cables with a tension roller, which run from the angular points of the front of the trailer to the angular points on the back of the vehicle.

In addition, encoders for the angle measurement can be used.

The direction of travel of the vehicle 32 moving the trailer 20 along can be established for instance by means of the signal which is passed to the reversing light.

By means of these obtained angles, the angle $\gamma$ can be adjusted using the actuator 6, as a result of which the angle $\delta$ between the direction of travel R of the wheel 2 and the longitudinal axis A of the trailer 20 can also be set. As the trailer 20 moves along in direction N of the vehicle 32, the angle $\gamma$ is turned back to 0 by the actuator. If the vehicle is moving straight on, the angle $\gamma$ can then be fixed to zero by locking the rotating assembly 5 in place, as described above. As a result, of this, the trailer 20 can behave like a common trailer.

When the vehicle 32 is driving in reverse in direction B, a number of different scenarios are possible. In this case the intention is for the driver of the vehicle to select the most suitable scenario. The selection of one of the scenarios can for instance be carried out by setting one or more knobs and/or switches mounted in the control panel of the vehicle.

By means of these knobs and/or switches it can for instance be transmitted to a logical switch mechanism according to which scenario the angle $\gamma$ has to be set. The logical switch mechanism in its turn can then transmit a control signal to the actuator 6, as a result of which the angle $\gamma$ is set.

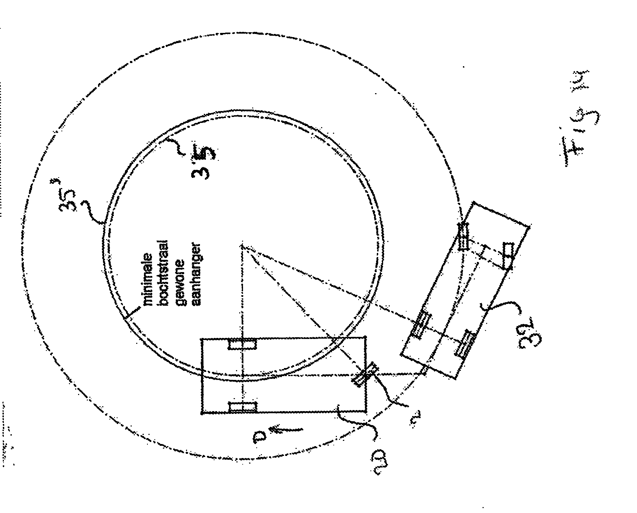

In a first scenario, as represented in Figure 14, the longitudinal axis S of the drawbar frame 3 is kept parallel to the longitudinal axis A of the trailer 20. The trailer 20 in that case will lest itself be driven in reverse in the same way as a common trailer with a fixed drawbar. As a result, the curve radius 35 of the trailer may be smaller than the curve radius 35' of a common trailer hen this is moved in direction D behind a vehicle 32.

In order to obtain this effect, for the angle $\gamma$ formula 1 applies, with the setting parameter U being greater than 2.

$$\gamma = -U \cdot \alpha \qquad (1)$$

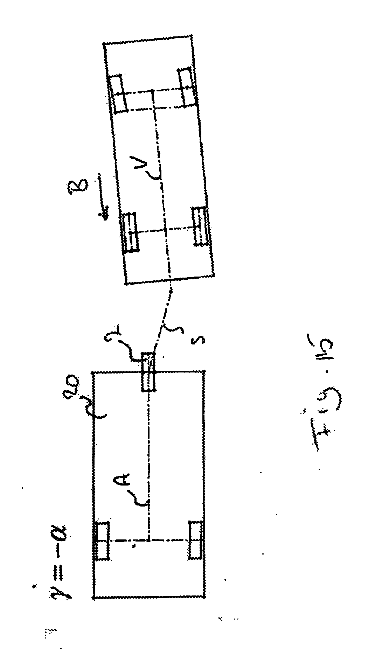

In a second scenario the direction of travel R of the wheels 2A can be kept even with the direction of the longitudinal axis A of the trailer 20, as is illustrated in Figure 15. In this case for the angle $\gamma$ formula 2 applies.

$$\gamma = -\alpha \qquad (2)$$

With this the direction R of the wheel 2 is fixed as it were with the longitudinal axis A of the trailer. As a result, the trailer can in fact only move forward in the direction of the longitudinal axis A of the trailer, straight in reverse. This scenario may be favourable for instance when it is undesirable for the trailer 20 to turn.

In a third scenario it is possible to drive straight on with the trailer 20 in a normal fashion. In this case the angle $\gamma$ is kept at 0 degrees. As a result, the drawbar 1 behaves like a common drawbar.

$$\gamma = 0 \qquad (3)$$

This scenario is used in any case when the vehicle is moving along in the direction N, when the vehicle is driving straight on and towing the trailer.

This scenario can also be selected when driving in reverse, for instance when the driver of the vehicle 32 is experienced or skilled in driving in reverse with a common trailer with drawbar.

A fourth scenario is possible in which the angle $\beta$ between the longitudinal axis V of the vehicle 32 and the longitudinal axis S of the drawbar frame 3 is kept in a constant ratio vis-à-vis the angle $\delta$ between the direction of travel R of the wheels 2 and the longitudinal axis A of the trailer 20. In this case it holds that $\gamma$ has to satisfy formula 4.

$$\gamma = \delta - \alpha \qquad (4)$$

With this the vehicle 32 with trailer 20 is able to produce the same curve radius when driving in reverse as when driving straight on. The trailer in this process can be directed in reverse direction in a similar manner to a common trailer, but it will react more quickly, as if a shorter trailer were concerned.

When switching from driving straight on to driving in reverse and *vice versa,* this is the most practical option, because all parts, wheels, drawbar, and trailer are automatically in a position which would also have occurred while driving straight on. Changing the direction of travel can proceed smoothly in such a case.

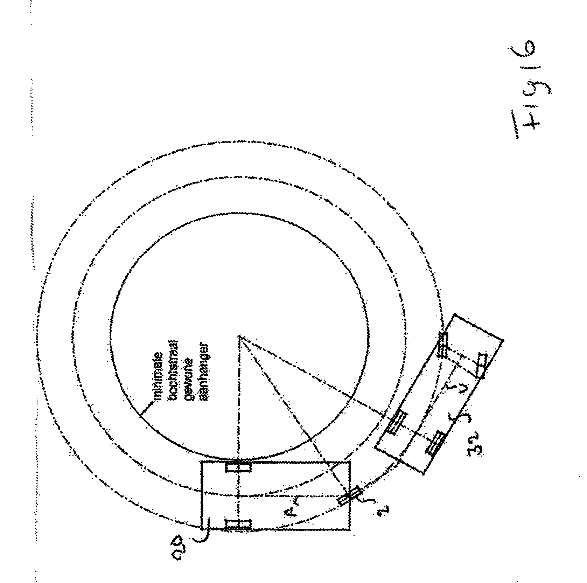

A fifth scenario is possible in which the angles $\alpha$ and $\beta$ are in a fixed ratio vis-à-vis one another. This scenario is illustrated with reference to Figure 16. In this case the angle $\gamma$ is set according to formula 5.

$$\gamma = -U \cdot \alpha + W \cdot \beta \qquad (5)$$

In this formula the setting parameter U is greater than 2 and the setting parameter W is greater than 2 also. In this case the ratio of the setting parameters U/V may correspond approximately with the ratio between the shaft and the overhang on the one hand and the wheelbase of the trailer on the other.

Because in this scenario the angles $\alpha$ any $\beta$ are in a fixed ratio, when the trailer 20 is moved along in direction D in fact one degree of freedom is eliminated. As a result , it becomes easier for the driver of a vehicle 32 to predict how the trailer 20 will move as it is moved along in direction D.

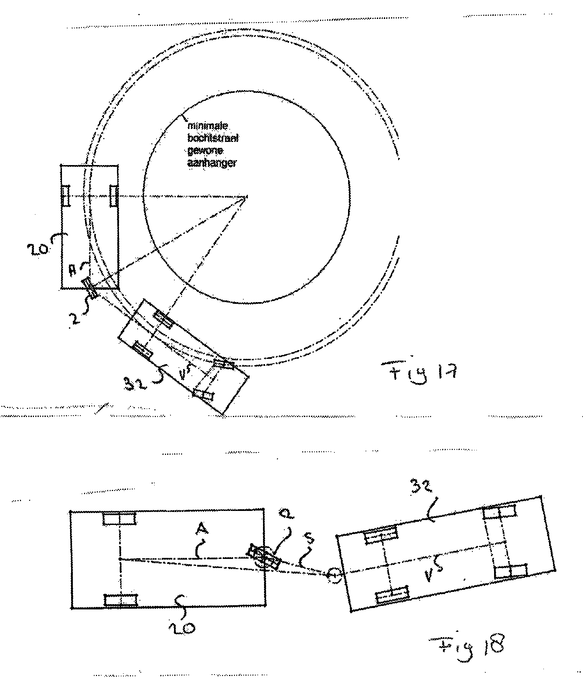

In a sixth scenario, as represented in Figure 17, the longitudinal axis S of the drawbar frame is kept parallel to the longitudinal axis V of the vehicle 32. In order to achieve this, the angle $\gamma$ has to satisfy formula 6.

$$\gamma = W \cdot \beta \qquad (6)$$

Wherein in this formula the setting parameter W is greater than 3. Also in this scenario a degree of freedom is eliminated by the as it were imaginary fixing of the longitudinal axis S of the drawbar frame to the longitudinal axis V of the vehicle 32. As a result of this elimination of a degree of freedom it is again easier for a driver of the vehicle 32 to predict in which direction the trailer 20 would move. As a result of this setting the trailer 20 behaves as if the trailer coupling reaches up to the trailer, and the trailer itself is shorter than usual. As a result of this, the movement of the trailer in this scenario becomes very sensitive.

A seventh scenario is that the trailer is kept as it were straight behind the car. In this case for angle $\gamma$ the formula 7 applies.

$$\gamma = -U \cdot \alpha - W \cdot \beta \qquad (7)$$

With this the setting parameter U corresponds approximately with 3 and the setting parameter W corresponds approximately with 2.4. With this setting the trailer will remain fully automatically behind the vehicle while it is driven in reverse. This is especially advantageous for people who have trouble driving in reverse with a trailer. However, it is not possible to make too sharp turns in such a case.

In an eighth scenario the control of the actuator and the direction of travel of the wheels is implemented manually by someone. In this case the user determining the direction of the wheel may be standing for instance next to or behind the trailer 20 in order to determine in this way where the trailer should be sent to while driving in reverse.

In the above-mentioned scenarios, as a result of the removal of a degree of freedom, each time the predictive character while driving in reverse with a trailer is increased. In the scenarios 4 and 5, however, this is somewhat at the expense of the minimal curve radius of the trailer 20 compared with the minimal curve radius of a traditional trailer. The above-described drawbar can be used in the case of for instance house trailers or caravans.

Up to now, most caravans or house trailers have been provided with a frame and an axle connected to the frame, with the centre of mass of the entire trailer primarily resting on the single axle. During transport hardly any weights rests on the coupling of the vehicle moving the trailer along. As a result of this, such trailers have a comparatively simple construction.

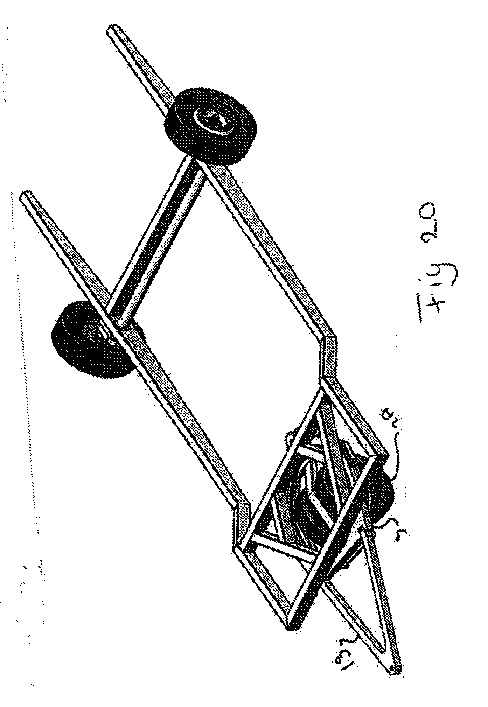

However, because the centre of mass rests primarily on the axle shaft of the trailer, such a trailer is comparatively unstable during the transport. As a result, at speeds of more than 80 kilometers per hour the trailer may for instance start to bounce or wobble. In the case of an embodiment with a drawbar according to the invention, as illustrated in Figure 20, the primary shaft can be moved back vis-à-vis the direction of transport T of the trailer. As a result, the centre of mass of the entire trailer lies more between the wheels 2a and 2b of the drawbar and the primary wheels of the trailer. This has a positive effect on the road-holding qualities of such a trailer.

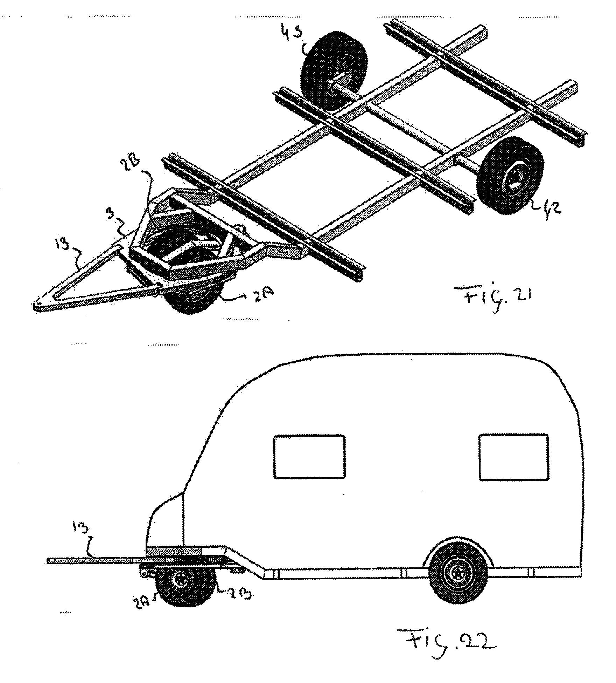

In Figure 21 an alternative frame for a trailer is represented. In this represented embodiment the frame 2 comprises box girders mounted in longitudinal direction with a number of cross members. The number of cross members may be varied here in order to meet a certain torsional stiffness.

Figure 22 in a schematic side view shows a house trailer with a drawbar according to the invention. It can be deduced from this figure that the centre of mass of the entire trailer is indeed no longer to be found primarily above the primary shaft of the trailer, but rather between the primary shaft and the wheels of the drawbar.

In a further embodiment of the invention, as shown in Figure 23, the frame has been replaced by a so-called sandwich bottom 39. Such a bottom can for instance comprise two bottom plates 36, 37, with a spatial structure 38 arranged between them. An advantage of such a bottom is that the supporting frame and the bottom plate can be integrated into one whole, as a result of which less height is required for a still sufficiently sturdy house trailer body. In this case the chassis and the body have been united to form one whole, as it were.

In this case the wheel housings 40, 41 can for instance be mounted on the sandwich plate 39, with a biterminate shaft from one wheel 42 to the other wheel 43 no longer being necessary.

It should be noted that the invention is not restricted to the embodiments discussed above. Thus instead of one or two wheels, more wheels can be used. In particular in the case of heavy loads, for instance in the case of low-loading semitrailers, a multiple number of wheels may be advantageous.

The invention can also be used in the case of a multiple number of trailers in tandem formation, in a so-called truck train. Because each drawbar is equipped with a mechanism which essentially eliminates one degree of freedom while driving in reverse, such truck trains train, may become easier to control.

Instead of two rotating assembly, one special rotating assembly with three rings may be used. In this case the outermost ring can for instance be connected to the chassis, the middle ring can be connected to the drawbar frame, and the innermost ring can be connected to the wheel suspension.

Such and other variants will be clear to the skilled person and are deemed to be within the framework of invention as expressed in the following claims.

**Claims**

1. Drawbar (1) suitable for a trailer (20), for instance a caravan, comprising:

   - at least one wheel (2A, 2B),
   - a wheel suspension (4, 4A),
   - a drawbar frame (3),
   - a first rotating assembly (5),
   - a second rotating assembly (11),

   wherein the wheel suspension (4, 4A) with the at least one wheel (2A, 2B) rotatably suspended around a lying axle ($y_1$), is swivel connected to the drawbar frame (3) by means of the first rotating assembly (5) around a first standing axle ($x_f$),
   wherein the drawbar frame (3) can be swivel connected to the trailer (20) by means of the second rotating assembly (11) around a second standing axle ($x_s$) **characterized in that** the lying axle ($y_1$) intersects the at least one wheel within the circumference of the rotating assemblies (5, 11).

2. Drawbar (1) according to claim 1, wherein an actuator (6) is provided which is suitable for setting the angle ($\gamma$) between the direction of travel (R) of the wheel (2A,2B) and the longitudinal axis (S) of the drawbar frame.

3. Drawbar (1) according to claim 1 or 2, wherein the first rotating assembly (5) can be locking, for instance using a stop mechanism, so that the direction of rotation around the standing axle (xf) of the wheel suspension (4,4A) with the at least one wheel (2A,2B) vis-à-vis the drawbar frame (3) can be locked.

4. Drawbar (1) according to any one of the preceding claims, further comprising a first angle measuring device (34), for measuring an angle ($\delta$) between the longitudinal axis (A) of the trailer (20) and the longitudinal axis (S) of the drawbar frame (3) and a second angle measuring device for measuring an angle ($\alpha + \beta$) between the longitudinal axis (A) of the trailer (20) and the longitudinal axis (V) of a vehicle (32) moving the trailer (20) along.

5. Drawbar (1) according to claim 4, wherein the measured angles can be passed to a logical switch mechanism, and wherein the angle ($\gamma$) between the direction of travel (R) of the at least one wheel (2A, 2B) vis-à-vis the longitudinal axis (S) of the drawbar frame (3), depending on the measured angles ($\alpha$ and $\beta$), can be adjusted by means of the actuator (6) addressable by the logical switch mechanism.

6. Drawbar (1) according to any one of the preceding claims, wherein the angle ($\gamma$) between the direction of travel (R) of the at least one wheel (2A, 2B) is adjustable in such a way that the angle ($\alpha$) between the longitudinal axis (A) of the trailer (20) and the longitudinal axis (S) of the drawbar frame (3) can be kept at half the angle ($\alpha + \beta$) between the longitudinal axis (A) of the trailer (20) and the longitudinal axis (V) of the vehicle (32) moving the trailer (20) along.

7. Method of pushing a trailer (20) with drawbar (1) along according to any one of claims 1-6, wherein the method comprises the following steps to be carried out in suitable sequence:

   (a) providing a trailer (20), equipped with a drawbar (1) according to any one of claims 1-6,
   (b) providing a vehicle (32) suitable for moving the trailer (20) along,
   (c) connecting the vehicle (32) to the shaft (13) of the drawbar (1).
   (d) pushing the trailer (20) along by means of the vehicle (32).

8. Caravan, equipped with a drawbar (1) according to any one of claims 1-6.


**Patentansprüche**

1. Deichsel (1) für einen Anhänger (20), zum Beispiel einen Caravan, die aufweist:

   - mindestens einem Rad (2A,2B),
   - einer Radaufhängung (4,4A),
   - einem Deichselrahmen (3),
   - einer ersten Drehanordnung (5),
   - einer zweiten Drehanordnung (11),

   wobei die Radaufhängung (4,4A) mit dem mindestens einen Rad (2A,2B), das drehbar um eine liegende Achse ($y_1$) aufgehängt ist, über die erste Drehanordnung (5) um eine erste aufrechte Achse ($x_f$) drehbar mit dem Deichselrahmen (3) verbunden ist,
   wobei der Deichselrahmen (3) über die zweite Drehanordnung (11) um eine zweite aufrechte Achse ($x_s$) drehbar mit dem Anhänger (20) verbunden werden kann,
   **dadurch gekennzeichnet, dass** die liegende Achse ($y_1$) das mindestens eine Rad innerhalb des Umfangs der Drehanordnungen (5,11) schneidet.

2. Deichsel (1) nach Anspruch 1, wobei ein Stellglied (6) zum Einstellen des Winkels ($\gamma$) zwischen der Laufrichtung (R) des Rades (2A,2B) und der Längsachse (S) des Deichselrahmens bereitgestellt ist.

3. Deichsel (1) nach Anspruch 1 oder 2, wobei die erste Drehanordnung (5) verriegelnd sein kann, zum Beispiel unter Verwendung eines Stoppmechanismus, so dass die Drehrichtung der Radaufhängung (4,4A) mit dem mindestens einen Rad (2A,2B) um die aufrechte Achse ($x_f$) bezüglich des Deichselrahmens (3) verriegelt werden kann.

4. Deichsel (1) nach einem der vorstehenden Ansprüche, ferner mit einer ersten Winkelmessvorrichtung (34) zum Messen eines Winkels ($\delta$) zwischen der Längsachse (A) des Anhängers (20) und der Längsachse (S) des Deichselrahmens (3) und einer zweiten Winkelmessvorrichtung zum Messen eines Winkels ($\alpha+\beta$) zwischen der Längsachse (A) des Anhängers (20) und der Längsachse (V) eines den Anhänger (20) fortbewegenden Fahrzeugs (32).

5. Deichsel (1) nach Anspruch 4, wobei die gemessenen Winkel zu einem logischen Schaltmechanismus übertragen werden können und wobei der Winkel ($\gamma$) zwischen der Laufrichtung (R) des mindestens einen Rades (2A,2B) und der Längsachse (S) des Deichselrahmens (3) in Abhängigkeit von den gemessenen Winkeln ($\alpha$ und $\beta$) mit Hilfe des von dem logischen Schaltmechanismus ansteuerbaren Stellglieds (6) eingestellt werden kann.

6. Deichsel (1) nach einem der vorstehenden Ansprüche, wobei der Winkel ($\gamma$) zwischen der Laufrichtung (R) des mindestens einen Rades (2A,2B) und der Längsachse (S) des Deichselrahmens (3) derart einstellbar ist, dass der Winkel ($\delta$) zwischen der Längsachse (A) des Anhängers (20) und der Längsachse (S) des Deichselrahmen (3) halb so groß gehalten werden kann wie der Winkel ($\alpha+\beta$) zwischen der Längsachse (A) des Anhängers (20) und der Längsachse (V) des den Anhänger (20) fortbewegenden Fahrzeugs (32).

7. Verfahren zum Schieben eines Anhängers (20) mit Hilfe einer Deichsel (1) nach einem der Ansprüche 1 bis 6, wobei das Verfahren die folgenden, in geeigneter Reihenfolge auszuführenden Schritte aufweist:

   (a) Bereitstellen eines Anhängers (20), der mit einer Deichsel (1) nach einem der Ansprüche 1 bis 6 ausgestattet ist,
   (b) Bereitstellen eines geeigneten Fahrzeugs (32) zum Fortbewegen des Anhängers (20),
   (c) Verbinden des Fahrzeugs (32) mit dem Arm (13) der Deichsel (1),
   (d) Schieben des Anhängers (20) mit Hilfe des Fahrzeugs (32).

8. Caravan, ausgestattet mit einer Deichsel nach einem der Ansprüche 1 bis 6.

**Revendications**

1. Barre d'attelage (1) appropriée pour une remorque (20), par exemple une caravane, comprenant :

   - au moins une roue (2A, 2B),
   - une suspension de roue (4, 4A),
   - un cadre de barre d'attelage (3),
   - un premier ensemble rotatif (5),
   - un second ensemble rotatif (11),

   dans laquelle la suspension de roue (4, 4A), avec l'au moins une roue (2A, 2B) suspendue de façon rotative autour d'un axe horizontal ($y_1$), est raccordée de façon pivotante au cadre de barre d'attelage (3) au moyen du premier ensemble rotatif (5) autour d'un premier axe vertical ($x_f$),
   dans laquelle le cadre de barre d'attelage (3) peut être raccordé de façon pivotante à la remorque (20) au moyen du second ensemble rotatif (11) autour d'un second axe vertical ($x_s$), **caractérisé en ce que** l'axe horizontal ($y_1$) croise l'au moins une roue au sein de la circonférence des ensembles rotatifs (5, 11)

2. Barre d'attelage (1) selon la revendication 1, dans laquelle un actionneur (6) est prévu qui est approprié pour régler l'angle ($\gamma$) entre la direction de déplacement (R) de la roue (2A, 2B) et l'axe longitudinal (S) du cadre de barre d'attelage.

3. Barre d'attelage (1) selon la revendication 1 ou 2, dans laquelle le premier ensemble rotatif (5) peut se verrouiller, par exemple en utilisant un mécanisme d'arrêt, pour que la direction de rotation autour de l'axe vertical ($x_f$) de la suspension de roue (4, 4A) avec l'au moins une roue (2A, 2B) par rapport au cadre de barre d'attelage (3) puisse être verrouillée.

4. Barre d'attelage (1) selon une quelconque des revendications précédentes, comprenant en outre un premier dispositif de mesure d'angle (34), pour mesurer un angle ($\delta$) entre l'axe longitudinal (A) de la remorque (20) et l'axe longitudinal (S) du cadre de barre d'attelage (3) et un second dispositif de mesure d'angle pour mesurer un angle ($\alpha + \beta$) entre l'axe longitudinal(A) de la remorque (20) et l'axe longitudinal (V) d'un véhicule (32) déplaçant la remorque (20).

5. Barre d'attelage (1) selon la revendication 4, dans laquelle les angles mesurés peuvent être passés à un mécanisme commutateur logique, et dans laquelle l'angle ($\gamma$) entre la direction de déplacement (R) de l'au moins une roue (2A, 2B) par rapport à l'axe longitudinal (S) du cadre de barre d'attelage (3), en fonction des angles mesurés ($\alpha$ et $\beta$), peut être réglé au moyen de l'actionneur (6) adressable par le mécanisme commutateur logique.

6. Barre d'attelage (1) selon une quelconque des revendications précédentes, dans laquelle l'angle ($\gamma$) entre la direction de déplacement (R) de l'au moins une roue (2A, 2B) est réglable de manière telle que l'angle ($\alpha$) entre l'axe longitudinal (A) de la remorque (20) et l'axe longitudinal (S) du cadre de barre d'attelage (3) puisse être maintenu à une moitié de l'angle ($\alpha + \beta$) entre l'axe longitudinal (A) de la remorque (20) et l'axe longitudinal (V) du véhicule (32) déplaçant la remorque (20).

7. Procédé pour pousser une remorque (20) avec une barre d'attelage (1) selon une quelconque des revendications 1 à 6, dans lequel le procédé comprend les étapes suivantes destinées à être réalisées dans une séquence appropriée :

(a) la fourniture d'une remorque (20), équipée d'une barre d'attelage (1) selon une quelconque des revendications 1 à 6,
(b) la fourniture d'un véhicule (32) approprié pour déplacer la remorque (20),
(c) le raccordement du véhicule (32) à la tige (13) de la barre d'attelage (1),
(d) la poussée de la remorque (20) au moyen du véhicule (32).

8. Caravane, équipée d'une barre d'attelage (1) selon une quelconque des revendications 1 à 6.

Fig 1

Fig. 1A

Fig 2

Fig 3'

Fig. 5

Fig. 4

Fig. 6

Fig. 7

Fig. 9

Fig 8

Fig 10

Fig. 11

Fig. 12

Fig 13

EP 2 335 952 B1

Fig 14

$$\dot{\gamma} = -\alpha$$

A

20

B

2

V

S

Fig. 15

minimale
bochtstraal
gewone
aanhanger

20

2

32

Fig 16

EP 2 335 952 B1

minimale
bochtstraal
gewone
aanhanger

Fig 17

Fig 18

Fig 19

Fig 20

Fig. 21

Fig. 22

Fig. 23

Fig. 24

**EP 2 335 952 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CH 443012